# EUROPÄISCHE PATENTSCHRIFT

(11) **EP 3 829 956 B1**
(45) Veröffentlichungstag und Bekanntmachung des Hinweises auf die Patenterteilung: **26.04.2023**
(21) Anmeldenummer: 19762717.7
(22) Anmeldetag: 26.07.2019
(51) Int. Cl.: B62D 1/181

(54) **VERSTELLANTRIEB FÜR EINE LENKSÄULE UND LENKSÄULE FÜR EIN KRAFTFAHRZEUG**
ADJUSTING DRIVE FOR A STEERING COLUMN AND STEERING COLUMN FOR A MOTOR VEHICLE
MÉCANISME DE RÉGLAGE DESTINÉ À UNE COLONNE DE DIRECTION ET COLONNE DE DIRECTION POUR VÉHICULE AUTOMOBILE

(30) Priorität: 30.07.2018 DE 102018212696
(43) Veröffentlichungstag der Anmeldung: 09.06.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2019/070144
(87) Internationale Veröffentlichungsnummer: WO 2020/025465

(56) Entgegenhaltungen:
- DE-A1-102015 224 602

## Beschreibung

### Stand der Technik

Die Erfindung betrifft einen Verstellantrieb für eine motorisch verstellbare Lenksäule für ein Kraftfahrzeug, umfassend eine motorische Antriebseinheit und eine Außen-Gewindespindel, die ein Außengewinde und ein koaxiales Innengewinde aufweist, in das eine Innen-Gewindespindel eingreift, wobei die Außen-Gewindespindel und die Innen-Gewindespindel von der Antriebseinheit relativ zueinander um eine Achse drehend antreibbar sind. Weiterhin ist eine motorisch verstellbare Lenksäule Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einem Mantelrohr einer Stelleinheit drehbar gelagert, die von einer Trageinheit an der Fahrzeugkarosserie gehalten ist. Dadurch, dass die Stelleinheit zumindest ein Mantelrohr aufweist, welches in einer mit der Trageinheit verbundenen Manteleinheit, auch als Führungskasten oder Kastenschwinge bezeichnet, in Richtung der Längsachse teleskopartig verschiebbar ist, kann eine Längsverstellung des Lenkrads relativ zur Karosserie erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Bei motorisch verstellbaren Lenksäulen ist es bekannt, zur Verstellung einen motorischen Verstellantrieb mit einer Antriebseinheit vorzusehen, die einen elektrischen Antriebsmotor umfasst, der einen Spindeltrieb mit einer in eine Spindelmutter eingeschraubten Gewindespindel antreibt. Durch die Antriebseinheit sind die Gewindespindel und die Spindelmutter gegeneinander um die Gewindespindelachse, oder kurz Spindelachse, drehend antreibbar, wodurch die Gewindespindel und die Spindelmutterje nach Drehrichtung in Richtung der Gewindespindelachse translatorisch aufeinander zu oder voneinander weg bewegt werden können. Die Gewindespindel und die Spindelmutter sind an relativ zueinander verstellbaren Teilen der Lenksäule, beispielsweise an einer Manteleinheit und einer Trageinheit, oder an in Achsrichtung teleskopierbaren Mantelrohren einer Manteleinheit, in Richtung der Spindelachse abgestützt.

In einer als Tauchspindelantrieb bekannten Ausführungsform ist die Gewindespindel bezüglich Drehung um die Spindelachse mit einem feststehenden Teil der Lenksäule, beispielsweise der Trageinheit, der Manteleinheit oder einem Mantelrohr, unverdrehbar gekoppelt und die Spindelmutter ist drehend antreibbar, aber in Richtung der Spindelachse an einem relativ dazu verstellbaren Teil der Lenksäule abgestützt. Durch drehenden Antrieb der Spindelmutter kann eine translatorische Bewegung relativ zur Gewindespindel bewirkt werden, wodurch die über den Spindeltrieb verbundenen Teile der Lenksäule relativ zueiander verstellt werden können. Eine Lenksäule mit einem derartigen Verstellantrieb ist beispielsweise in der DE 10 2017 207 561 A1 beschrieben.

Alternativ kann in einer als Rotationsspindelantrieb bekannten Ausführung die Gewindespindel relativ zur Lenksäule drehend antreibbar sein, und die Spindelmutter bezüglich Rotation um die Spindelachse feststehend.

Der maximal realisierbare Verstellweg ist bei einem einfachen Rotations- oder Spindelantrieb durch die Länge der Gewindespindel begrenzt. Um größere Verstellungen realisieren zu können, beispielsweise um im autonomen Fahrbetrieb das Lenkrad außerhalb des manuellen Bedienbereichs zu verstauen, sind entsprechend lange Gewindespindeln erforderlich. Um diese Begrenzung zu überwinden, ist in der DE 10 2015 224 602 A1, welche die Merkmale des Oberbegriffs des unabhängigen Anspruchs zeigt, eine teleskopartig geschachtelte Anordnung von zwei Spindeltrieben vorgeschlagen worden. Dabei ist eine erste bzw. äußere Gewindespindel, im Folgenden als Außen-Gewindespindel bezeichnet, axial in Richtung der Spindelachse fest an der Antriebseinheit abgestützt und drehend antreibbar. Durch ein auf die Außen-Gewindespindel aufgeschraubtes Führungsstück, welches mit einem zu verstellenden Lenksäulen-Bauteil verbunden ist, wird ein als Rotationsspindelantrieb ausgebildeter erster Spindeltrieb gebildet. Die Außen-Gewindespindel ist als Hohlspindel ausgebildet, mit einem Innengewinde, in welches eine relativ zum Führungsstück und zur Außen-Gewindespindel drehfest abgestützte Innen-Gewindespindel eingreift. Dadurch wird ein zweiter, als Tauchspindeltrieb ausgebildeter Spindeltrieb gebildet, der mit dem ersten Spindeltreib zwangsgekoppelt ist. Das bedeutet, dass in jedem Verstellzustand immer beide Spindeltriebe gleichzeitig von der Antriebseinheit drehend angetrieben werden. Um die daraus beim Verstellen resultierenden relativ hohen Reibungs- und Trägheitskräfte beider Spindeltriebe zu überwinden, muss der motorische Verstellantrieb ein entsprechend hohes Antriebsmoment liefern und relativ groß dimensioniert sein, was zu hohem Bauraumbedarf und Gewicht führt. Außerdem wird dadurch, dass die Außen-Gewindespindel in Richtung der Spindelachse fest an der Antriebseinheit abgestützt ist, der nutzbare freie Verstellweg, gemessen von der Antriebseinheit bis zum freien Ende der Innen-Gewindespindel, durch die Länge der Außen-Gewindespindel nach unten begrenzt. Das freie Ende der Innen-Gewindespindel kann nämlich nur bis zum freien Ende der Außen-Gewindespindel an die Antriebseinheit angenähert werden.

Angesichts der vorangehend erläuterten Problematik ist es eine Aufgabe der vorliegenden Erfindung, einen Verstellantrieb zur Verfügung zu stellen, der ein geringeres Antriebsmoment erfordert und einen optimierten freien Verstellweg bietet.

### Darstellung der Erfindung

Diese Aufgabe wird erfindungsgemäß gelöst durch einen Verstellantrieb mit den Merkmalen des Anspruchs 1 und eine Lenksäule mit den Merkmalen des Anspruchs 14. Vorteilhafte Weiterbildungen ergeben sich aus den Unteransprüchen.

Erfindungsgemäß wird für einen Verstellantrieb der eingangs genannten Art vorgeschlagen, dass die Außen-Gewindespindel mit ihrem Außengewinde in eine Antriebsmutter eingreift, wobei die Antriebsmutter von der Antriebseinheit drehend antreibbar ist und in Richtung der Achse relativ zur Antriebseinheit abgestützt ist.

Die Außen-Gewindespindel ist zumindest abschnittsweise als Hohlspindel, bevorzugt auf ihrer gesamten Länge in axialer Richtung durchgängig hohl ausgebildet. Das Innengewinde ist koaxial innen in dem Durchgang angeordnet. Die in das Innengewinde eingreifende Innen-Gewindespindel kann zumindest abschnittweise axial in die Außen-Gewindespindel eintauchen.

Durch die Antriebsmutter, auch als Antriebs-Spindelmutter bezeichnet, und die Außen-Gewindespindel wird ein erster Spindeltrieb gebildet, der in einem ersten Betriebsmodus als Tauchspindelantrieb betrieben werden kann. Dabei wird durch drehenden Antrieb der Antriebsmutter die Außen-Gewindespindel linear in Richtung der Achse, dies ist die Spindelachse, abhängig von der Drehrichtung relativ zu der Antriebsmutter translatorisch bewegt, die relativ zur Antriebseinheit in Richtung der Achse abgestützt ist. Die Außen-Gewindespindel kann zur Einstellung der kürzesten Verstellposition mit ihrem antriebsseitigen Ende durch die Antriebsmutter hindurch in die Außen-Gewindespindel axial eintauchen, wodurch ihr verstellseitiges, der Antriebseinheit abgewandtes Ende, mit dem ein Verbindungselement zum Angriff an ein zu verstellendes Teil der Lenksäule verbunden ist, in einem kürzesten Abstand bis nahe an die Antriebsmutter bzw. an die Antriebseinheit heranbewegt werden kann. Mit anderen Worten kann die Außen-Gewindespindel in der Antriebseinheit in Richtung der Achse versenkt werden. Der dadurch erreichbare kürzeste Abstand ist bei der Erfindung kürzer als die Länge der Außen-Gewindespindel, im Gegensatz zum Stand der Technik, bei dem kürzeste Abstand durch die Länge der in Richtung der Achse fest an der Antriebseinheit abgestützte Außen-Gewindespindel fest vorgegeben ist und nicht unterschritten werden kann. Der nutzbare freie Verstellweg kann dadurch in vorteilhafter Weise vergrößert werden. Durch die erfindungsgemäß relativ zur Antriebseinheit versenkbare Außen-Gewindespindel kann der zur Verfügung stehende Bauraum besser genutzt werden, wodurch flexiblere Einbaumöglichkeiten realisierbar sind.

Ein Vorteil beim Einsatz in verstaubaren Lenksäulen ergibt sich, wenn ein erfindungsgemäßer Verstellantrieb zur Längsverstellung eingesetzt wird, wobei sich die Antriebseinheit in Richtung der Lenksäulenachse an der Fahrzeugkarosserie abstützt. Die Außen-Gewindespindel kann in der Verstauposition aus dem Bedienbereich des Fahrgastraums heraus in Richtung der Achse in Längsrichtung der Lenksäule weiter heraus bewegt werden als im Stand der Technik, bei dem die Außen-Gewindespindel auch bei maximaler Verkürzung in ihrer gesamten Länge von der Antriebseinheit in den Fahrgastraum vorsteht.

Dadurch, dass die Antriebsmutter von der Antriebseinheit relativ zur Außen-Gewindespindel in Drehung versetzt werden kann, wird eine relative Bewegung in Richtung der Achse ermöglicht, ohne dass eine gleichzeitige relative Drehung von Außen- und Innengewindespindel erfolgen müsste. Die Innen-Gewindespindel, die ein Verbindungselement zur Verbindung mit dem zu bewegenden Teil der Lenksäule aufweist, wird bei der linearen Bewegung von der Außen-Gewindespindel in Richtung der Achse mitgenommen. Dadurch muss die Antriebseinrichtung zunächst lediglich den aus der Antriebsmutter und der Außen-Gewindespindel gebildeten ersten Spindeltrieb antreiben. Daraus resultiert der Vorteil, dass eine geringere Antriebsleistung erforderlich ist als im Stand der Technik, in dem der zwischen Innen- und Außen-Gewindespindel gebildete zweite Spindeltrieb zwangsgekoppelt ist und in jedem Verstellzustand zusammen mit dem ersten Spindeltrieb angetrieben wird. Folglich kann durch die Erfindung die Antriebseinheit kleiner und leichter dimensioniert werden.

Bei der beschriebenen Erzeugung der linearen Bewegung der Außen-Gewindespindel relativ zur Antriebseinheit wirken die Außen-Gewindespindel und die Antriebsmutter als Tauchspindelantrieb zusammen. Dieser Funktionsmodus kann als Tauchspindelmodus bezeichnet werden. Die in das Gewinde der Außen-Gewindespindel eingeschraubte Innen-Gewindespindel wird mit dieser in Richtung der Achse linear mitbewegt. Um - falls erforderlich - eine relative lineare Bewegung zwischen Innen- und Außen-Gewindespindel zu erzeugen, können diese relativ zueinander drehend angetrieben werden.

Eine vorteilhafte Weiterbildung der Erfindung sieht vor, dass zwischen der Außen-Gewindespindel und der Antriebsmutter eine Kupplungseinrichtung ausgebildet ist, zur lösbaren drehschlüssigen Kupplung der Außen-Gewindespindel mit der Antriebsmutter. Die Kupplungseinrichtung ist lösbar gestaltet und kann wahlweise in einen aktivierten Kopplungszustand gebracht werden, in dem die Antriebsmutter drehfest mit der Außen-Gewindespindel gekoppelt ist, oder in einen deaktivierten Lösezustand, in dem der vorangehend beschriebene Tauchspindelmodus zwischen Antriebsmutter und Außen-Gewindespindel aktiv ist. Im Lösezustand ist der erste Spindeltrieb in dem vorangehend beschriebenen Tauchspindelmodus aktiv. Im aktivierten Kopplungszustand ist der Tauchspindelmodus des ersten Spindeltriebs deaktiviert, und die Außen-Gewindespindel ist zusammen mit der Antriebsmutter von der Antriebseinheit um die Achse drehend antreibbar. Dadurch kann das koaxiale Innengewinde der Außen-Gewindespindel relativ zur Innen-Gewindespindel in Drehung versetzt werden, so dass der durch das Innengewinde und die darin eingreifende Innen-Gewindespindel gebildete zweite Spindeltrieb aktiviert wird und entsprechend eine relative lineare Bewegung zwischen Innen-Gewindespindel und Außen-Gewindespindel erzeugt werden kann. Dann befindet sich die Innen-Gewindespindel im Zusammenwirken mit dem Innengewinde der Außen-Gewindespindel im Tauchspindelmodus.

Durch die Kupplungseinrichtung kann wahlweise das von der Antriebseinrichtung abgegebene Antriebsmoment in den ersten oder den zweiten Spindeltrieb eingeleitet werden. Da jeweils nur einer der Spindeltriebe aktiv angekoppelt ist, kann die Antriebsleistung der Antriebseinrichtung kleiner sein als im Stand der Technik, in dem immer beide Spindeltriebe aktiv sind.

Eine vorteilhafte Ausführung sieht vor, dass die Kupplungseinrichtung mindestens ein Anschlagelement aufweist, welches fest an der Außen-Gewindespindel angebracht ist und in Richtung der Achse, d.h. axial gegen die Antriebseinheit abstützbar ist. Das Anschlagelement kann als außen über das Außengewinde der Außen-Gewindespindel vorstehender Kragen oder Vorsprung ausgebildet sein. Es bildet einen Endanschlag, der bei einer gegebenen Drehrichtung des Antriebs ein weiteres Einschrauben der Außen-Gewindespindel in die Antriebsmutter blockiert, sobald er in Richtung der Achse gegen die Antriebseinheit anschlägt, beispielsweise an der Antriebsmutter stirnseitig zur Anlage kommt. Dadurch wir eine weitere relative Drehung blockiert, und bei einem weiteren drehenden Antrieb rotiert die Außen-Gewindespindel zusammen mit der Antriebsmutter, so dass die Außen-Gewindespindel und die Innen-Gewindespindel von der Antriebseinheit relativ zueinander um eine Achse drehend angetrieben werden und sich die Innen-Gewindespindel relativ in Richtung der Achse zur Außen-Gewindespindel verschiebt bzw. translatorisch bewegt. Die Außen-Gewindespindel wirkt mit ihrem Innengewinde somit wie eine Spindelmutter, in welche die Innen-Gewindespindel eingreift.

Vorteilhaft ist, dass ein Anschlagelement mit geringem Aufwand realisierbar ist, und das Koppeln oder Lösen von Antriebsmutter und Außen-Gewindespindel ohne zusätzliche bewegliche Elemente selbsttätig erfolgt, allein durch die relative lineare Bewegung. Bevorzugt kann ein Anschlagelement in einem Endbereich außen auf der Außen-Gewindespindel ausgebildet sein und gegen die Antriebsmutter abstützbar sein. Dadurch, dass es als Kragen, ganz oder teilweise umlaufender Vorsprung oder Absatz ausgebildet ist, begrenzt es in Anschlagposition ein weiteres Eindrehen des Außengewindes der Außen-Gewindespindel in die Antriebsmutter. Das Anschlagelement kann mit der Gewindespindel als einstückiges integrales Bauteil ausgebildet sein. Alternativ kann das Anschlagelement durch eine Umformoperation auf der Gewindespindel befestigt sein. Besonders bevorzugt ist das Anschlagelement als Hülse oder als Scheibe ausgebildet, die an der Gewindespindel festgelegt ist und/oder durch Umformung der Gewindespindel erzeugt wird.

Es ist vorteilhaft, dass jeweils ein Anschlagelement im antriebsseitigen, der Antriebseinheit zugewandten Endbereich und im verstellseitigen, der Antriebseinheit abgewandten, freien Endbereich der Außen-Gewindespindel angeordnet ist. Beim Ausfahren des ersten, äußeren Spindeltriebs durch lineares Herausbewegen der Außen-Gewindespindel aus der Antriebseinheit kann das antriebsseitige Anschlagelement an dem Antriebsrad anschlagen. Dadurch wird die Kupplungseinrichtung aktiviert, und bei der darauf folgenden weiteren Drehung wird die Außen-Gewindespindel drehend mitgenommen und die relativ dazu drehfeste, in das Innengewinde eingreifende Innen-Gewindespindel des zweiten, inneren Spindeltriebs linear aus der Außen-Gewindespindel heraus bewegt, also von der Antriebsmutter weg gerichtet ausgefahren. Umgekehrt wird zum Einfahren die Antriebsmutter von der Antriebseinheit in relativ zur Außen-Gewindespindel Gegenrichtung rotiert. Dadurch wird das antriebsseitige Anschlagelement aus der Anschlagposition gelöst, und die Kupplungseinrichtung gelöst. In Folge dessen wird durch die Rotation der Antriebsmutter die Außen-Gewindespindel linear auf die Antriebseinheit zu bewegt. Das antriebsseitige Anschlagelement wird von der Antriebsmutter in Richtung der Achse linear weg bewegt, bis das andere, verstellseitige Anschlagelement an der Antriebsmutter anschlägt. Dadurch wird die Außen-Gewindespindel wieder mit der Antriebsmutter gekoppelt und in zum Ausfahren entgegengesetzter Drehrichtung rotiert. Dadurch wird der zweite, innere Spindeltrieb aktiviert und die Innen-Gewindespindel in Richtung auf die Antriebseinheit zu in die Außen-Gewindespindel linear eingefahren.

Das Umschalten zwischen dem ersten, äußeren Spindeltrieb und dem zweiten, inneren Spindeltrieb kann durch eine mechanisch einfach aufgebaute Kupplungseinrichtung mit mechanischen Anschlagelementen zuverlässig realisiert werden. Der Aufbau ist robust und wartungsarm.

Das Innengewinde kann einstückig mit der Außen-Gewindespindel ausgebildet sein. Dadurch kann ein einfach herstellbarer, leichter Aufbau realisiert werden.

Alternativ kann das Innengewinde in einem Gewindestück ausgebildet sein, das mit der Außen-Gewindespindel verbunden ist. Das Gewindestück bildet eine Spindelmutter für die Innen-Gewindespindel. Es kann aus einem vom Material der Außen-Gewindespindel unterschiedlichen Werkstoff gefertigt sein, der hinsichtlich der Materialpaarung in einem Spindeltrieb mit der vorzugsweise aus Stahl bestehenden Innen-Gewindespindel günstig ist, wie beispielsweise einem Buntmetall oder Kunststoff. Die Außen-Gewindespindel kann ebenfalls aus Stahl bestehen, und zumindest das Gewinde der Antriebsmutter ebenfalls aus Buntmetall oder Kunststoff. Dadurch können die Spindeltriebe leichtgängig, laufruhig und verschleißarm optimiert werden.

Eine vorteilhafte Weiterbildung ist, dass das Gewindestück eine Kupplungseinrichtung aufweist. Das Gewindestück kann dreh- und zugfest an einem Ende der Außengewindespindel angebracht sein. Beispielsweise kann das Gewindestück außen auf dem Außengewinde mit einem rohr- oder hülsenförmigen Ansatz festgelegt werden, welcher ein Anschlagelement einer Kupplungseinrichtung aufweist, wie etwa einen außen vorstehenden Vorsprung oder Kragen. Die Verbindung des Gewindestücks kann beispielsweise mittels Aufpressen auf die Außen-Gewindespindel erfolgen, wobei zusätzlich ineinander greifende plastische Verformungen erzeugt werden können, um eine Form- und/oder Kraftschluss in Drehrichtung und in Richtung der Achse auszubilden.

An dem freien, von der Außen-Gewindespindel abgewandten Ende der Innen- Gewindespindel und an der Antriebseinheit kann ein Verbindungselement zur Verbindung des Verstellantriebs mit einer Lenksäule eines Kraftfahrzeugs angeordnet sein, oder zur Verbindung mit der Karosserie des Kraftfahrzeugs. Zur Realisierung einer Längsverstellung kann beispielsweise die Antriebseinheit mit einer Manteleinheit verbunden sein, und die Innen-Gewindespindel an einem relativ zur Manteleinheit in Richtung der Lenkspindelachse teleskopartig verstellbaren Mantelrohr. Die Spindelachse und die Lenksäulenachse verlaufen dann im Wesentlichen parallel.

Ein Verbindungselement kann beispielsweise einen Gelenkkopf mit einer quer zur Spindelachse durchgehenden Verbindungsöffnung umfassen. Alternativ oder zusätzlich können Verbindungselemente von lösbaren oder unlösbaren Befestigungsanordnungen vorgesehen sein, beispielsweise Kraft- oder Formschlusselemente.

Die Außen-Gewindespindel und die Innen-Gewindespindel können gleiche Gewindesteigungen aufweisen. Dadurch können bei einer vorgegebenen Rotationsgeschwindigkeit der Antriebsmutter durch die Antriebseinheit der aus der Antriebmutter und der Außen-Gewindespindel gebildete äußere Spindeltrieb und der aus dem Innengewinde und der Innen-Gewindespindel gebildete innere Spindeltrieb mit durchgehend gleicher Geschwindigkeit linear in Richtung der Achse ein- und ausgefahren werden.

Alternativ ist es denkbar und möglich, dass die Außen-Gewindespindel und die Innen-Gewindespindel unterschiedliche Gewindesteigungen aufweisen. Für eine gegebene Rotationsgeschwindigkeit des Antriebs können unterschiedliche lineare Bewegungsgeschwindigkeiten der beiden Spindeltriebe realisiert werden. Beispielsweise kann durch einen Spindeltrieb mit größerer Gewindesteigung die Lenksäule schnell aus der oder in die Verstauposition gebracht werden, während der andere Spindeltrieb mit kleinerer Gewindesteigung für eine langsamere Feineinstellung eingesetzt werden kann. Es ist ebenfalls möglich, eine kleinere Gewindesteigung zur Erzeugung einer größeren Kraftübersetzung einzusetzen, falls für bestimmte Verstellungen eine größere lineare Stellkraft erforderlich sein sollte.

Es kann vorgesehen sein, dass der durch die Antriebsmutter und die Außen-Gewindespindel gebildete erste Spindeltrieb und/oder der durch die Außen-Gewindespindel und die Innen-Gewindespindel gebildete zweite Spindeltrieb selbsthemmend ausgebildet sind. Eine selbsthemmende Ausbildung, bei der eine in Achsrichtung auf den Verstellantrieb wirkende äußere Kraft aufgrund der im Gewinde herrschenden Reibung keine relative Drehung von Gewindespindel und Spindelmutter bewirkt, kann durch eine relativ flache Gewindesteigung bei einem vorzugsweise eingängigen Gewinde erreicht werden. Dadurch ist eine eingestellte Verstellposition ohne weitere Maßnahmen selbsttätig gegen die im Betrieb wirkenden Kräfte fixiert.

Alternativ kann erfindungsgemäß bei einem Verstellantrieb der eingangs genannten Art vorgesehen sein, dass die Außen-Gewindespindel mit ihrem Außengewinde in eine Antriebsmutter eingreift, wobei die Innen-Gewindespindel von der Antriebseinheit drehend antreibbar ist und in Richtung der Achse relativ zur Antriebseinheit abgestützt ist.

Die Innen-Gewindespindel ist in dieser Ausführung drehschlüssig mit der Antriebseinheit zum drehenden Antrieb verbunden, und stützt sich in Richtung der Achse relativ zur Antriebseinheit ab.

Die von der Antriebseinheit drehend antreibbare Innen-Gewindespindel bildet zusammen mit dem Innengewinde der Außen-Gewindespindel den zweiten, inneren Spindeltrieb. Dieser kann ebenfalls wie bei der oben beschriebenen ersten Ausführung unabhängig von dem ersten Spindeltrieb, der durch die Außen-Gewindespindel und die Antriebsmutter gebildet wird, aktiviert werden. Durch Rotation der Innen-Gewindespindel relativ zum Innengewinde ist es nämlich möglich, die Außen-Gewindespindel linear in Richtung der Achse zu verlagern, ohne dass die Außen-Gewindespindel relativ zur Antriebsmutter rotiert wird. Der erste Spindeltrieb ist inaktiv, und die Antriebsmutter wird dann zusammen mit der Außengewindespindel translatorisch in Richtung der Achse mitgenommen.

Es ist möglich, dass die Außen-Gewindespindel von der Innen-Gewindespindel drehend antreibbar ist relativ zur Antriebsmutter, die relativ zur Antriebseinheit drehfest angeordnet ist. Dadurch kann der erste, äußere Spindeltrieb aktiviert werden, der wegen der dabei drehend angetriebenen Außen-Gewindespindel als Rotationsspindelantrieb bezeichnet werden kann. Die Antriebseinheit ist zusammen mit der Innenspindel relativ an einem Bauteil der Lenksäule oder der Karosserie feststehend abgestützt, beispielsweise an einer Manteleinheit oder einem Mantelrohr. Die Antriebsmutter ist dabei in Richtung der Achse an einem dazu translatorisch verstellbaren Bauteil der Lenksäule drehfest um die Achse und in Richtung der Achse fixiert, beispielsweise an einem Mantelrohr.

Dadurch, dass die Innen-Gewindespindel durch das Innengewinde in axialer Richtung in die als Hohlspindel ausgebildete Außen-Gewindespindel eintauchen bzw. eingeschraubt werden kann, und die Außen-Gewindespindel ihrerseits durch die Antriebsmutter hindurch eingeschraubt werden kann, ist zwischen der Antriebseinheit und der Antriebsmutter ein nutzbarer freier Verstellweg realisierbar wie bei der ersten Ausführung mit der drehschlüssig mit der Antriebseinheit verbundenen Antriebsmutter.

Zur Aktivierung des ersten Spindeltriebs kann die Innen-Gewindespindel drehschlüssig mit der Außen-Gewindespindel gekoppelt werden.

Vorzugsweise kann dies dadurch realisiert werden, dass zwischen der Innen-Gewindespindel und der Außen-Gewindespindel eine Kupplungseinrichtung ausgebildet ist, zur lösbaren drehschlüssigen Kupplung der Innen-Gewindespindel mit der Außen-Gewindespindel. Durch die aktivierte Kupplungseinrichtung kann die Innen-Gewindespindel drehschlüssig relativ zum Innengewinde gekoppelt werden. Dadurch wird der zweite, innere Spindeltrieb, der aus der Innen-Gewindespindel zusammen mit dem Innengewinde gebildet wird, deaktiviert, und die Außen-Gewindespindel rotiert beim drehenden Antrieb der Innen-Gewindespindel zusammen mit dieser. Damit ist der erste Spindeltrieb, gebildet durch die Außen-Gewindespindel und die Antriebsmutter, aktiviert, und es wird eine translatorische Verstellung der Außen-Gewindespindel relativ zur Antriebsmutter erzeugt.

Die Erfindung umfasst weiterhin eine motorisch verstellbare Lenksäule für ein Kraftfahrzeug, umfassend einen erfindungsgemäßen Verstellantrieb gemäß den vorangehend beschriebenen Ausführungsformen, der zwischen axial relativ zueinander teleskopartig verstellbaren, die Lenkspindel lagernden Mantelrohren einer Manteleinheit angeordnet ist und/oder zwischen einer mit der Karosserie des Kraftfahrzeugs verbindbaren Trageinheit und einer eine Lenkspindel drehbar aufnehmenden Manteleinheit angeordnet ist. Zur Realisisierung einer Längsverstellung mit großem Verstellweg, beispielsweise bei verstaubaren Lenksäulen für autonomes Fahren, kann der Verstellantrieb parallel an der teleskopierbaren Mantelrohranordnung angebracht sein, so dass die Spindelachse parallel zur Lenkspindelachse liegt. Die Mantelrohranordnung kann zwei, drei oder mehr teleskopartig verstellbare Mantelrohre aufweisen, zwischen der Verstellantrieb mit der Antriebseinheit und der linear relativ dazu verstellbaren Innenspindel eingegliedert ist. An einem der Mantelrohre ist die Antriebsmutter in Richtung der Achse abgestützt, und an einem anderen Mantelrohr das freie Ende der Innenspindel. Durch den im Vergleich zum Stand der Technik größeren nutzbaren freien Verstellweg kann eine vorteilhafte kompaktere Bauform realisiert werden. Dabei ermöglicht die erfindungsgemäße getrennte Ansteuerung der Spindeltriebe den Einsatz einer kleineren und leichteren Antriebseinheit.

Es ist ebenfalls denkbar und möglich, die Innen-Gewindespindel ebenfalls als hohle Gewindespindel auszubilden, wobei die Innen-Gewindespindel ein Innengewinde aufweist, in der eine weitere innere Innen-Gewindespindel mit einem Außengewinde aufgenommen ist, die ebenfalls Anschlagelemente aufweisen kann und wenn die äußere Innen-Gewindespindel mit ihrem Anschlagelement an der Außen-Gewindespindel anschlägt und somit sich die Antriebsmutter, die Außen-Gewindespindel und die Innen-Gewindepindel synchron miteinander drehen und die innere Innen-Gewindespindel dazu drehfest ist, so dass die innere Innen-Gewindespindel sich translatorisch gegenüber dem Antriebsmutter, die Außen-Gewindespindel und die Innen-Gewindepindel bewegt. Somit kann eine Mehrfach-Gewindespindelanordnung geschaffen werden, die einen dritten oder weiteren Spindeltrieb umfasst.

Bevorzugt sind die Innengewinde und Außengewinde als Bewegungsgewinde, besonders bevorzugt als Trapezgewinde ausgebildet. Alternativ kann auch ein metrisches ISO-Gewinde gemäß DIN 13 oder ein Gewinde entsprechend der Lehre der deutschen Offenlegungsschrift DE 10 2014 103 879 A1 zum Einsatz kommen.

Es ist gleichfalls möglich, auch zur Höhenverstellung einer Lenksäule eine erfindungsgemä-βen Verstellantrieb einzusetzen, der sich dann an der Fahrzeugkarosserie und einem relativ dazu in der Höhe bewegbaren Bauteil der Lenksäule abstützt. Diese Anordnung ist insbesondere vorteilhaft, falls große Höhen-Verstellwege vorliegen. Ansonsten ist es möglich, einen einfachen Verstellantrieb zur Höhenverstellung einzusetzen, und einen erfindungsgemä-βen Verstellantrieb zur Längsverstellung.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: eine Lenksäule gemäß Figur 1 oder 2 in Seitenansicht mit einem teilweise längs der Spindelachse aufgeschnittenen Verstellantrieb,
- Figur 4: der Verstellantrieb gemäß Figur 3 in eingefahrener Verstellposition (Einfahrposition) im Längsschnitt,
- Figur 5: der Verstellantrieb gemäß Figur 4 in teilweise ausgefahrener Verstellposition (Zwischenposition) im Längsschnitt,
- Figur 6: der Verstellantrieb gemäß Figur 4 in voll ausgefahrener Verstellposition (Ausfahrposition) im Längsschnitt,
- Figur 7: eine zweite Ausführungsform eines Verstellantrieb in einer Darstellung ähnlich zu Figur 5 im Längsschnitt,
- Figur 8: eine dritte Ausführungsform eines Verstellantrieb im Längsschnitt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

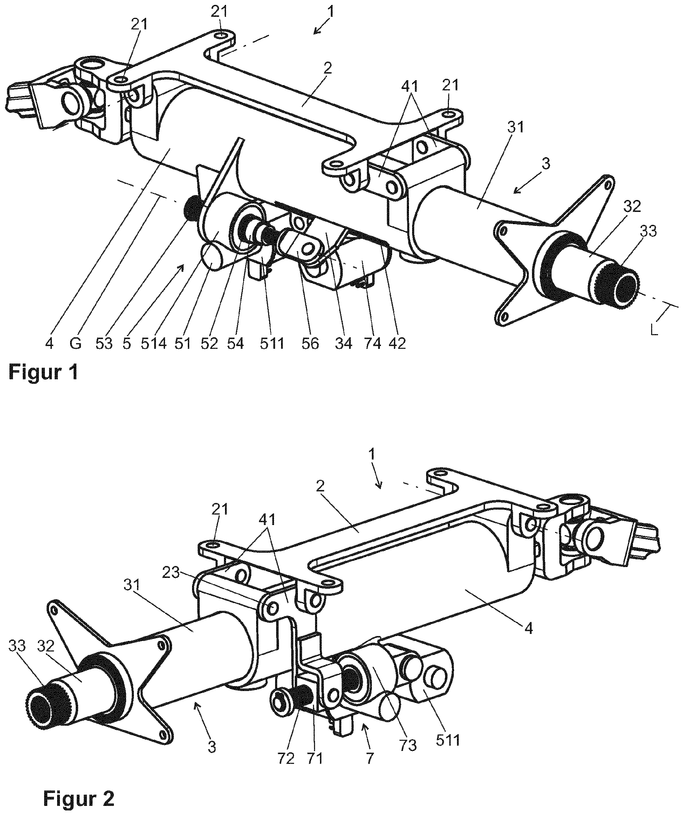

Figur 1 zeigt eine erfindungsgemäße Lenksäule 1 in einer schematischen perspektivischen Ansicht von oben links schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse (Lenkspindelachse) L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Ein erster, erfindungsgemäßer Verstellantrieb 5 zur teleskopartigen Längsverstellung der Stelleinheit 3 relativ zur Manteleinheit 4 in Richtung der Längsachse L weist eine Antriebseinheit 51 mit einem elektrischen Motor 511 auf, von der eine Antriebsmutter 52 um eine Achse G, der Spindelachse, drehend antreibbar ist. Hierzu ist mit dem Motor 511 eine Schnecke 512 verbunden, die mit einer an dem Antriebsrad 52 ausgebildeten Verzahnung 513 kämmt, welches damit als Schneckenrad eines Untersetzungsgetriebes ausgebildet ist.

Das Antriebsrad 52 ist in einem Lagergehäuse 514 um die Achse G drehbar gelagert, und in Richtung der Achse G fest an der Manteleinheit 4 abgestützt. Die Achse G liegt im Wesentlichen parallel zur Längsachse L.

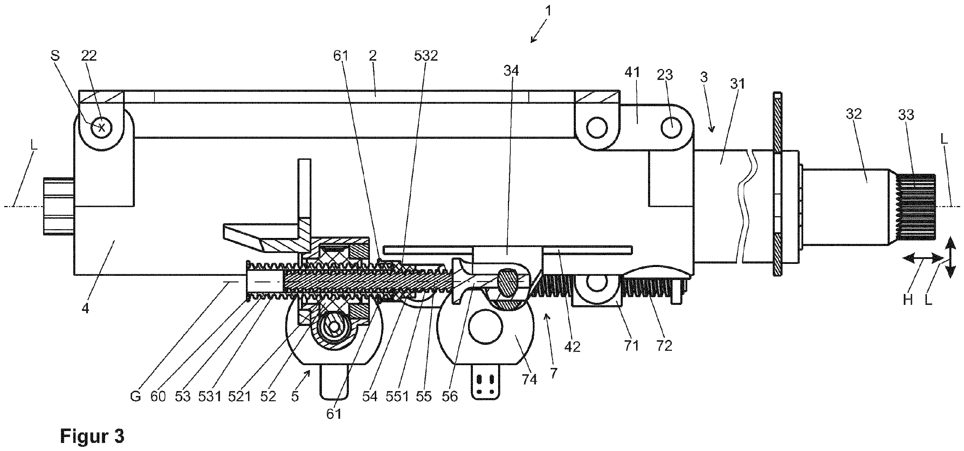

Vergrößerte Ansichten des Verstellantriebs 5 in einer Schnittansicht längs der Achse G sind in den Figuren 3, 4, 5 und 6 dargestellt.

Eine Außen-Gewindespindel 53, auch als erste Gewindespindel bezeichnet, ist in die Antriebsmutter 52 eingeschraubt, d.h. sie greift mit ihrem Außengewinde 531 in das Innengewinde 521 der Antriebsmutter 52 ein. Die Antriebsmutter 52 bildet zusammen mit der AußenGewindespindel 53 einen ersten Spindeltrieb.

Die Außen-Gewindespindel 53 weist in ihrem antriebsfernen, verstellseitigen Endbereich ein Gewindestück 54 auf, welches zugfest in Richtung der Achse G und drehfest mit der Außen-Gewindespindel 53 verbunden ist. Beispielsweise ist das Gewindestück 54 mit einem rohr- oder hülsenförmigen Befestigungsansatz 533 auf der Außen-Gewindespindel 53 plastisch verpresst und dadurch form- und kraftschlüssig axial und in Umfangsrichtung fixiert. In dem Gewindestück 54 weist die Außen-Gewindespindel 53 ein zur Achse G koaxiales Innengewinde 532 auf. Eine Innen-Gewindespindel 55 greift mit ihrem Außengewinde 551 in dieses Innengewinde 532 ein, ist also in das Innengewinde 532 eingeschraubt. Das Innengewinde 532 bildet auf diese Weise zusammen mit der Innen-Gewindespindel 55 einen zweiten Spindeltrieb.

In dem freien, verstellseitigen oder antriebsfernen Ende ist an der Innen-Gewindespindel 55 ein Verbindungselement 56 zug-und drehfest angebracht und mit einem fest an der Stelleinheit 3 angebrachten Übertragungselement 34 verbunden, und zwar fest in Richtung der Achse G bzw. der Längsachse L und drehfest bezüglich Drehung um die Achse G. Auf diese Weise stützt sich der Verstellantrieb 5 über die Innen-Gewindespindel 55 in Längsrichtung an dem Mantelrohr 31 ab.

Das Übertragungselement 34 erstreckt sich von der Stelleinheit 3 durch einen Schlitz 42 in der Manteleinheit 4. Zur teleskopierenden Verstellung der Lenksäule 1 in Längsrichtung kann das Übertragungselement 34 frei in dem Schlitz 42 in Längsrichtung entlangbewegt werden.

An der Außen-Gewindespindel 53 weist an ihrem ersten, antriebsseitigen Ende - in sämtlichen Figuren links - ein erstes Anschlagelement 60 auf. Das Anschlagelement 60 weist einen in das Außengewinde 531 nach außen vorstehenden Kragen oder Vorsprung auf, und kann daher nicht durch das Innengewinde 521 der Antriebsmutter 52 hindurch geschraubt werden. Es bildet dadurch einen ersten, antriebsseitigen Endanschlag für den linearen Spindelhub relativ zur Antriebsmutter 52.

An ihrem zweiten, antriebsfernen bzw. verstellseitigen Ende weist die Außen-Gewindespindel 53 ein zweites Anschlagelement 61 auf, welches ähnlich wie das erste Anschlagelement 60 einen in das Außengewinde 531 nach außen vorstehenden Kragen oder Vorsprung aufweist. Es bildet dadurch einen zweiten, verstellseitigen Endanschlag für den linearen Spindelhub relativ zur Antriebsmutter 52.

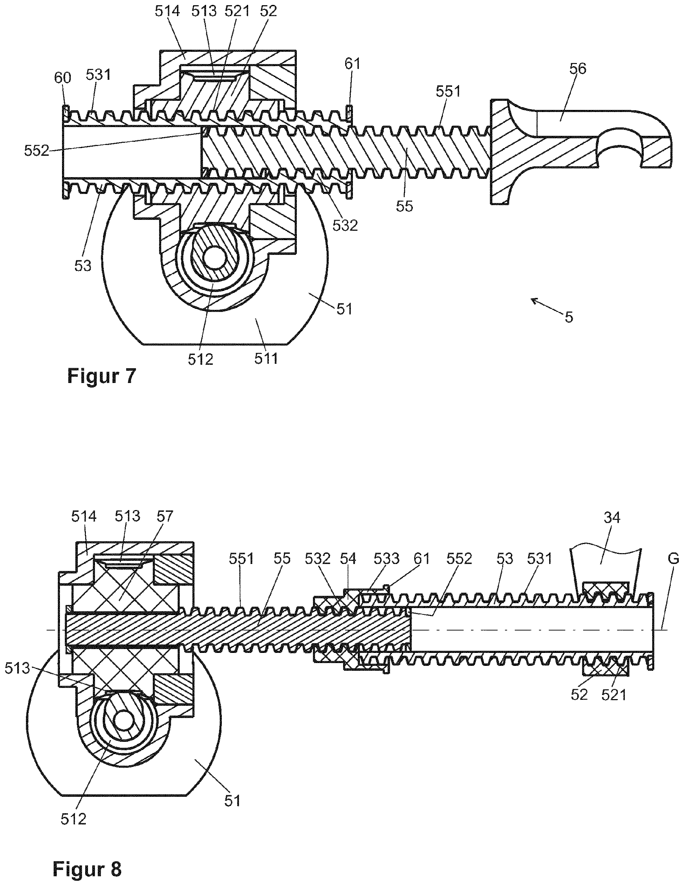

Das zweite Anschlagelement 61 kann, wie in der in den Figuren 3 bis 6 gezeigten Ausführung mit dem Gewindestück 54 fest verbunden oder einstückig mit diesem ausgebildet sein. Alternativ kann es, wie in der weiteren Ausführung gemäß Figur 7, ähnlich wie das erste Anschlagelement 60 als Kragen oder Vorsprung außen auf dem Außengewinde 531 festgelegt sein.

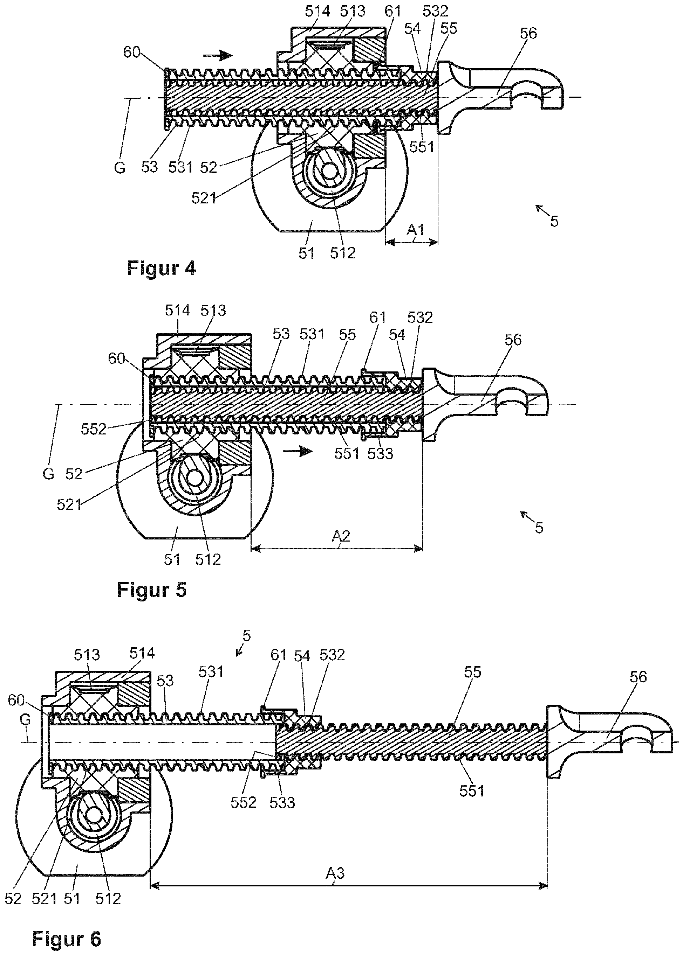

Die Anschlagelemente 60 und 61 bilden zusammen mit der Antriebsmutter 52 eine Kupplunsgseinrichtung, welche eine lösbare drehschlüssige Kopplung der Antriebsmutter 52 mit der Außen-Gewindespindel 53 ermöglicht. Dies wird im Folgenden anhand der Figuren 4 bis 6 erläutert, welche den Verstellantrieb 5 in unterschiedlichen Verstellpositionen zeigen.

Figur 4 zeigt den Verstellantrieb 5 in nahezu maximal verkürztem Zustand. Von der Antriebseinheit 51 aus gemessen hat das Verbindungselement 56 den kürzesten einstellbaren Abstand A1. Wird von der Antriebseinheit 51 die Antriebsmutter 52 relativ zur Außen-Gewindespindel 53 in Drehung versetzt, fungiert der erste Spindeltrieb als Tauchspindelantrieb, und die Außen-Gewindespindel 53 bewegt sich in Richtung der Achse G in Verstellrichtung linear relativ zur Antriebsmutter 52, wie mit dem Pfeil angedeutet - in der Darstellung von Figur 4 nach rechts. Dabei wird die in das Innengewinde 532 der Außen-Gewindespindel 53 eingreifende Innen-Gewindespindel 55 linear mit der Außen-Gewindespindel 53 mitbewegt, wobei keine relative Verdrehung zwischen der Innen-Gewindespindel 55 und der Außen-Gewindespindel 53 erfolgt, mit anderen Worten ist dieser zweite Spindeltrieb noch außer Betrieb bzw. deaktiviert, bis die in Figur 5 gezeigte Zwischenposition erreicht ist.

In der in Figur 5 gezeigten Zwischenposition ist die Außen-Gewindespindel 53 maximal in Verstellrichtung - in der Zeichnung nach rechts - aus der Antriebsmutter 52 herausgefahren. Von der Antriebseinheit 51 aus gemessen hat das Verbindungselement 56 einen mittleren einstellbaren Abstand A2, der größer dem Abstand A1 ist. Das Anschlagelement 60 schlägt stirnseitig - in der Zeichnung von links - an der Antriebsmutter 52 an und blockiert dadurch die weitere Rotation der Antriebsmutter 52 relativ zur Außen-Gewindespindel 53. Durch die aus dem Anschlagelement 60 im Zusammenwirken mit der Antriebsmutter 52 gebildete Kupplungseinrichtung ist die Außen-Gewindespindel 53 nun drehfest, zumindest in die eine zuvor vollführte Drehrichtung, mit der Antriebsmutter 52 gekoppelt, und der erste Spindeltrieb ist deaktiviert.

Durch den weiteren Antrieb wird die Antriebsmutter 52 zusammen mit der Außen-Gewindespindel 53 drehend um die Achse G angetrieben. Diese rotieren somit synchron miteinander. Damit wird das mit der Außen-Gewindespindel 53 verbundene Innengewinde 532 relativ zur bezüglich der Achse G drehfesten Innen-Gewindespindel 55 in Rotation versetzt. Dadurch wird der zweite, durch das Innengewinde 532 zusammen mit der Innen-Gewindespindel 55 gebildete Spindeltrieb aktiviert, und die Innen-Gewindespindel 55 von der Antriebsmutter 52 weg aus der Außen-Gewindespindel 53 herausbewegt, wie in Figur 5 mit dem Pfeil angedeutet, bis die in Figur 6 gezeigte, maximal ausgefahrene Verstellposition erreicht ist. Gemessen von der Antriebseinheit 51 hat darin das Verbindungselement 56 den größten einstellbaren Abstand A3.

Zum Einfahren wir die Antriebsmutter 52 in umgekehrter Drehrichtung angetrieben. Dadurch wird ausgehend von dem in Figur 6 dargestellten Zustand zunächst das Anschlagelement 60 - in der Zeichnung nach links - von der Antriebsmutter 52 entfernt, und der erste Spindeltrieb aktiviert. Die Antriebsmutter 52 rotiert relativ zur Außen-Gewindespindel 53, so dass diese linear auf die Antriebsmutter 52 zu bewegt wird und in diese eintaucht, bis das Anschlagelement 61 stirnseitig an der Antriebsmutter 52 anschlägt. Das Anschlagelement bildet dann zusammen mit der Antriebsmutter 52 eine Kupplungseinrichtung, welche die Antriebsmutter 52 - dieses Mal in umgekehrter Drehrichtung - mit der Außen-Gewindespindel 53 drehschlüssig koppelt. Durch die weitere Drehung wird der zweite, innere Spindeltrieb aktiviert, und die Innen-Gewindespindel 55 wird linear relativ zum Innengewinde 532 bewegt, bis sie wieder in die Außen-Gewindespindel 53 eintaucht, wie in Figur 4 dargestellt.

Alternativ kann beim Einfahren zunächst die Antriebsmutter 52 zusammen mit der Außen-Gewindespindel 52 drehend angetrieben werden, wodurch die Innen-Gewindespindel 55 linear relativ zum Innengewinde 532 bewegt wird, bis die Innen-Gewindespindel 55 wieder in die Außen-Gewindespindel 53 eintaucht, wie in Figur 5 dargestellt. Somit ist beim Einfahren zunächst der zweite Spindeltrieb aktiviert und der erste Spindeltrieb deaktiviert. Sobald die Innen-Gewindespindel 55 vollständig in die Außen-Gewindespindel 52 eingeschraubt ist, so dass durch weitere Drehung dank der Kupplungseinrichtung das Umschalten erfolgt, wobei der zweite Spindeltrieb deaktiviert ist und der erste Spindeltrieb aktiviert ist. Die Antriebsmutter 52 rotiert dann relativ zur Außen-Gewindespindel 53, so dass diese linear auf die Antriebsmutter 52 zu bewegt wird und in diese eintaucht, bis das Anschlagelement 61 stirnseitig an der Antriebsmutter 52 anschlägt.

An dem antriebsseitigen Ende der Innen-Gewindespindel 55 kann ein Anschlagelement 552 ausgebildet oder angebracht sein, welches in das Außengewinde 551 vorsteht, und nicht durch das Innengewinde 532 hindurch geschraubt werden kann. Dadurch bildet das Anschlagelement 552 einen Endanschlag, welches die Innen-Gewindespindel 55 gegen Entfernen aus dem Innengewinde 532 sichert.

Die Außen-Gewindespindel 53 und die Innen-Gewindespindel 55 können aus Stahl gefertigt sein. Das Gewindestück 54 und/ oder die Antriebsmutter 52 können zumindest im Bereich der Innengewinde 521 bzw. 532 aus Buntmetall oder Kunststoff gebildet sein.

Bei der in Figur 7 gezeigten Ausführung ist das Innengewinde 532 einstückig, bevorzugt integral einstückig, in der Außen-Gewindespindel 53 ausgebildet. Dadurch ist kein separat angebrachtes Gewindestück 54 vorhanden. Das zweite Anschlagelement 61 kann dann ähnlich wie das erste Anschlagelement 61 als außen auf dem Außengewinde angebrachter Vorsprung oder Krage ausgebildet sein, der einen Durchgang durch das Innengewinde 521 der Antriebsmutter 52 blockiert.

Figur 8 zeigt in einer Ansicht ähnlich Figur 6 eine alternative Ausführung eines Verstellantriebs 5, wobei für gleichwirkende Teile dieselben Bezugszeichen verwendet werden. Im Unterschied zur ersten Ausführung ist die Innen-Gewindespindel 55 drehschlüssig und fest in Richtung der Achse G mit einem Getrieberad 57 verbunden, welches wie in Figur 6 die Antriebsmutter 52 von der Antriebseinheit 51 relativ zur Lenksäule um die Achse G drehend antreibbar ist. Die Antriebsmutter 52 ist drehfest um die Achse G und in Richtung der Achse G fest an einem Übertragungselement 34 abgestützt, welches an einem relativ zur Antriebseinheit 51 verstellbaren Mantelrohr 31 angebracht ist. Die Innen-Gewindespindel 55 weist ein Außengewinde 551 auf, welches mit dem Innengewinde 532 des Gewindestücks 54 der Außen-Gewindespindel 53 in Eingriff steht. Somit wird durch das Außengewinde der Innen-Gewindespindel 55 und dem Innengewinde 532 des Gewindestücks 54 der Außen-Gewindespindel 53 der zweite (innere) Spindeltrieb gebildet. Die Antriebsmutter 52 weist ein Innengewinde 521 auf, wobei das Außengewinde 531 der Außen-Gewindespindel 53 in das Innengewinde 521 eingreift und den ersten (äußeren) Spindeltrieb bildet.

Die Innen-Gewindespindel 55 weist an ihrem von der Antriebseinheit 51 abgewandeten, freien Ende ein Anschlagelement 552 auf, welches ähnlich ausgebildet sein kann wie ein Anschlagelement 60 oder 61. Wie für die erste Ausführung beschrieben, kann dieses Anschlagelement 552 nicht durch das Innengewinde 532 des Gewindestücks 54 hindurch geschraubt werden. Wenn die Außen-Gewindespindel 53 durch relative translatorische Verstellung - in der Zeichnung nach rechts - relativ zur Innen-Gewindespindel 55 bewegt wird in dem die Innen-Gewindespindel 55 durch die Antriebseinheit 52 drehend angetrieben wird, schlägt das Anschlagelement 552 an dem Anschlagstück 54 an, welches dadurch drehschlüssig mit der Innen-Gewindespindel 55 gekoppelt wird. Der innere Spindeltrieb wird dadurch deaktiviert. Die Außen-Gewindespindel 53 wird nun über das Gewindestück 54 von der Innen-Gewindespindel 55 drehend angetrieben, und der erste, äußere Spindeltrieb wird aktiviert, wobei die Innen-Gewindespindel 55 und die Außen-Gewindespindel gemeinsam und synchron durch die Antriebseinheit antreibbar sind. Dabei wird die Außen-Gewindespindel 53 relativ zur Antriebsmutter 52 rotiert, so dass eine translatorische Relativbewegung erzeugt wird.

Durch das Zusammenwirken des Anschlagelements 552 mit dem Innengewinde 532 wird eine Kupplungseinrichtung gebildet, von der die Innen-Gewindespindel 55 wahlweise mit der Außen-Gewindespindel 53 drehmomentenschlüssig gekoppelt werden kann. Wie bei der ersten Ausführung ist es möglich, den ersten Spindeltrieb unabhängig von dem zweiten Gewindetrieb anzutreiben, so dass die erfindungsgemäßen Vorteile realisiert werden können.

Zur Höhenverstellung kann die Manteleinheit 4 um eine quer zur Längsachse L liegende, horizontale Schwenkachse S verschwenkbar in einem Schwenklager 22 an der Trageinheit 2 gelagert sein. Im vorderen Bereich ist die Manteleinheit 4 über einen Stellhebel 41 mit der Trageinheit 2 verbunden. Durch eine Drehbewegung des Stellhebels 41 mittels eines Stellantriebs 6 (siehe Figuren 2 und 3 ) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

In Figur 2 ist erkennbar, wie zur Verstellung in Höhenrichtung H ein zweiter Verstellantrieb 7 an der Lenksäule 1 angebracht ist. Dieser Verstellantrieb 7 ist im Beispiel als einfacher Rotationsspindelantrieb ausgebildet und umfasst eine Spindelmutter 71, in die eine Gewindespindel 72 eingreift. Die Gewindespindel 72 ist in einem Lagergehäuse 73 an der Manteleinheit 4 abgestützt, und von einem elektrischen Stellmotor 74 wahlweise in beide Rotationsrichtungen drehend antreibbar.

Die Spindelmutter 71 ist bezüglich einer Drehung um ihre Achse feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 71 kann - je nach Drehrichtung des Stellmotors 74 - die Spindelmutter 71 in Richtung der Achse G translatorisch relativ zur Gewindespindel 72 verlagert werden, so dass entsprechend die über den Stellhebel 41 mit der Spindelmutter 71 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Alternativ kann der Verstellantrieb 7 auch wie ein erfindungsgemäßer Verstellantrieb 5 ausgebildet sein.

### Bezugszeichenliste

- 1: Lenksäule
- 2: Trageinheit
- 21: Befestigungsmittel
- 22: Schwenklager
- 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Schlitz
- 5: Verstellantrieb
- 51: Antriebseinheit
- 511: Motor
- 512: Schnecke
- 513: Verzahnung
- 514: Lagergehäuse
- 52: Antriebsmutter
- 521: Innengewinde
- 53: Außen-Gewindespindel
- 531: Außengewinde
- 532: Innengewinde
- 533: Befestigungsansatz
- 54: Gewindestück
- 55: Innen-Gewindespindel
- 551: Außengewinde
- 552: Anschlagelement
- 56: Verbindungselement
- 57: Getrieberad
- 60, 61: Anschlagelement
- 7: Verstellantrieb
- 71: Spindelmutter
- 72: Gewindespindel
- 73: Lagergehäuse
- 74: Motor
- L: Längsachse
- G: Achse (Spindelachse)
- S: Schwenkachse

## Patentansprüche

1. Verstellantrieb (5) für eine motorisch verstellbare Lenksäule (1) für ein Kraftfahrzeug, umfassend eine motorische Antriebseinheit (51) und eine Außen-Gewindespindel (53), die ein Außengewinde (531) und ein koaxiales Innengewinde (532) aufweist, in das eine Innen-Gewindespindel (55) eingreift, wobei die Außen-Gewindespindel (53) und die Innen-Gewindespindel (55) von der Antriebseinheit (51) relativ zueinander um eine Achse (G) drehend antreibbar sind,
**dadurch gekennzeichnet,**
**dass** die Außen-Gewindespindel (53) mit ihrem Außengewinde (531) in eine Antriebsmutter (52) eingreift, wobei die Antriebsmutter (52) oder die Innen-Gewindespindel (55) von der Antriebseinheit (51) drehend antreibbar ist und in Richtung der Achse (G) relativ zur Antriebseinheit (51) abgestützt ist.

2. Verstellantrieb (5) nach Anspruch 1, **dadurch gekennzeichnet, dass** zwischen der Außen-Gewindespindel (53) und der Antriebsmutter (52) eine Kupplungseinrichtung (60, 61) ausgebildet ist, zur lösbaren drehschlüssigen Kupplung der Außen-Gewindespindel (53) mit der Antriebsmutter (52).

3. Verstellantrieb (5) nach Anspruch 2, **dadurch gekennzeichnet, dass** die Kupplungseinrichtung mindestens ein Anschlagelement (60, 61) aufweist, welches fest an der Außen-Gewindespindel (53) angebracht ist und in Richtung der Achse (G) gegen die Antriebseinheit (51) abstützbar ist.

4. Verstellantrieb nach Anspruch 3, **dadurch gekennzeichnet, dass** ein Anschlagelement (60, 61) in einem Endbereich außen auf der Außen-Gewindespindel (53) ausgebildet ist und gegen die Antriebsmutter (52) abstützbar ist.

5. Verstellantrieb (5) nach einem der vorangehenden Ansprüche, **dadurch gekennzeichnet, dass** das Innengewinde (532) einstückig mit der Außen-Gewindespindel (53) ausgebildet ist

6. Verstellantrieb (5) nach einem der Ansprüche 1 bis 4, **dadurch gekennzeichnet, dass** das Innengewinde (532) in einem Gewindestück (54) ausgebildet ist, das mit der Außen-Gewindespindel (53) verbunden ist.

7. Verstellantrieb (5) nach Anspruch 6, **dadurch gekennzeichnet, dass** das Gewindestück (54) eine Kupplungseinrichtung (61) aufweist.

8. Verstellantrieb (5) nach einem der vorangehenden Ansprüche, **dadurch gekennzeichnet, dass** die Außen-Gewindespindel (53) und die Innen-Gewindespindel (55) gleiche Gewindesteigungen aufweisen.

9. Verstellantrieb (5) nach einem der Ansprüche 1 bis 7, **dadurch gekennzeichnet, dass** die Außen-Gewindespindel (53) und die Innen-Gewindespindel (55) unterschiedliche Gewindesteigungen aufweisen.

10. Verstellantrieb (5) nach einem der vorangehenden Ansprüche, **dadurch gekennzeichnet, dass** der durch die Antriebsmutter (52) und die Außen-Gewindespindel (53) gebildete erste Spindeltrieb und/oder der durch die Außen-Gewindespindel (53) und die Innen-Gewindespindel (55) gebildete zweite Spindeltrieb selbsthemmend ausgebildet sind.

11. Verstellantrieb (5) nach einem der vorangehenden Ansprüche, **dadurch gekennzeichnet, dass** zwischen der Innen-Gewindespindel (55) und der Außen-Gewindespindel (53) eine Kupplungseinrichtung (552) ausgebildet ist, zur lösbaren drehschlüssigen Kupplung der Innen-Gewindespindel (55) mit der Außen-Gewindespindel (53).

12. Verstellantrieb (5) nach Anspruch 11, **dadurch gekennzeichnet, dass** die Kupplungseinrichtung mindestens ein Anschlagelement (552) aufweist, welches fest an der Innen-Gewindespindel (55) angebracht ist und in Richtung der Achse (G) gegen die Außen-Gewindespindel (53) abstützbar ist.

13. Verstellantrieb (5) nach Anspruch 12, **dadurch gekennzeichnet, dass** ein Anschlagelement (552) in einem Endbereich außen auf der Innen-Gewindespindel (55) ausgebildet ist und in Richtung der Achse (G) gegen das Innengewinde (532) abstützbar ist.

14. Motorisch verstellbare Lenksäule (1) für ein Kraftfahrzeug, umfassend einen Verstellantrieb (5) nach einem der Ansprüche 1 bis 10, der zwischen axial relativ zueinander teleskopartig verstellbaren, die Lenkspindel (32) lagernden Mantelrohren (31, 4) einer Manteleinheit (4) angeordnet ist und/oder zwischen einer mit der Karosserie des Kraftfahrzeugs verbindbaren Trageinheit (2) und einer eine Lenkspindel (32) drehbar aufnehmenden Manteleinheit (4) angeordnet ist.

## Claims

1. An adjusting drive (5) for a motor-adjustable steering column (1) for a motor vehicle, comprising a motorized drive unit (51) and an external threaded spindle (53) which has an external thread (531) and a coaxial internal thread (532) into which an internal threaded spindle (55) engages, wherein the external threaded spindle (53) and the internal threaded spindle (55) are able to be driven in rotation relative to one another about an axis (G) by the drive unit (51),
**characterized in that**
the external threaded spindle (53) engages with its external thread (531) in a drive nut (52), wherein the drive nut (52) or the internal threaded spindle (55) is able to be driven in rotation by the drive unit (51) and is supported relative to the drive unit (51) in the direction of the axis (G).

2. The adjusting drive (5) as claimed in claim 1, **characterized in that** a coupling device (60, 61) is configured between the external threaded spindle (53) and the drive nut (52), for the releasable rotationally fixed coupling of the external threaded spindle (53) to the drive nut (52).

3. The adjusting drive (5) as claimed in claim 2, **characterized in that** the coupling device has at least one stop element (60, 61) which is fixedly attached to the external threaded spindle (53) and which is able to be supported in the direction of the axis (G) against the drive unit (51).

4. The adjusting drive as claimed in claim 3, **characterized in that** a stop element (60, 61) is configured in an end region externally on the external threaded spindle (53) and may be supported against the drive nut (52).

5. The adjusting drive (5) as claimed in one of the preceding claims, **characterized in that** the internal thread (532) is configured in one piece with the external threaded spindle (53).

6. The adjusting drive (5) as claimed in one of claims 1 to 4, **characterized in that** the internal thread (532) is configured in a threaded piece (54) which is connected to the external threaded spindle (53).

7. The adjusting drive (5) as claimed in claim 6, **characterized in that** the threaded piece (54) has a coupling device (61).

8. The adjusting drive (5) as claimed in one of the preceding claims, **characterized in that** the external threaded spindle (53) and the internal threaded spindle (55) have equal thread pitches.

9. The adjusting drive (5) as claimed in one of claims 1 to 7, **characterized in that** the external threaded spindle (53) and the internal threaded spindle (55) have different thread pitches.

10. The adjusting drive (5) as claimed in one of the preceding claims, **characterized in that** the first spindle drive formed by the drive nut (52) and the external threaded spindle (53) and/or the second spindle drive formed by the external threaded spindle (53) and the internal threaded spindle (55) are configured to be self-locking.

11. The adjusting drive (5) as claimed in one of the preceding claims, **characterized in that** a coupling device (552) is configured between the internal threaded spindle (55) and the external threaded spindle (53) for the releasable rotationally fixed coupling of the internal threaded spindle (55) to the external threaded spindle (53).

12. The adjusting drive (5) as claimed in claim 11, **characterized in that** the coupling device has at least one stop element (552) which is fixedly attached to the internal threaded spindle (55) and which is able to be supported in the direction of the axis (G) against the external threaded spindle (53).

13. The adjusting drive (5) as claimed in claim 12, **characterized in that** a stop element (552) is configured in an end region externally on the internal threaded spindle (55) and may be supported in the direction of the axis (G) against the internal thread (532).

14. A motor-adjustable steering column (1) for a motor vehicle comprising an adjusting drive (5) as claimed in one of claims 1 to 10, which is arranged between casing tubes (31, 4) of a casing unit (4) which are axially adjustable relative to one another telescopically and which bear the steering spindle (32) and/or which is arranged between a support unit (2) which is able to be connected to the body of the motor vehicle and a casing unit (4) rotatably receiving a steering spindle (32).

## Revendications

1. Mécanisme de réglage (5) destiné à une colonne de direction (1) à réglage motorisé pour un véhicule automobile, comprenant une unité d'entraînement (51) motorisée et une broche filetée extérieure (53) qui présente un filetage extérieur (531) et un filetage intérieur (532) coaxial, dans lequel vient en prise une broche filetée intérieure (55), la broche filetée extérieure (53) et la broche filetée intérieure (55) pouvant être entraînées en rotation l'une par rapport à l'autre autour d'un axe (G) par l'unité d'entraînement (51),
**caractérisé en ce que**
la broche filetée extérieure (53) vient en prise, par son filetage extérieur (531), dans un écrou d'entraînement (52), l'écrou d'entraînement (52) ou la broche filetée intérieure (55) pouvant être entraîné(e) en rotation par l'unité d'entraînement (51) et étant soutenu(e) en direction de l'axe (G) par rapport à l'unité d'entraînement (51).

2. Mécanisme de réglage (5) selon la revendication 1, **caractérisé en ce qu'**un dispositif d'accouplement (60, 61) est formé entre la broche filetée extérieure (53) et l'écrou d'entraînement (52), pour l'accouplement libérable et solidaire en rotation de la broche filetée extérieure (53) à l'écrou d'entraînement (52).

3. Mécanisme de réglage (5) selon la revendication 2, **caractérisé en ce que** le dispositif d'accouplement présente au moins un élément de butée (60, 61), lequel est fixé solidement à la broche filetée extérieure (53) et peut être soutenu en direction de l'axe (G) contre l'unité d'entraînement (51).

4. Mécanisme de réglage selon la revendication 3, **caractérisé en ce qu'**un élément de butée (60, 61) est formé dans une région d'extrémité sur la broche filetée extérieure (53) et à l'extérieur de celle-ci et peut être soutenu contre l'écrou d'entraînement (52).

5. Mécanisme de réglage (5) selon l'une des revendications précédentes, **caractérisé en ce que** le filetage intérieur (532) est formé d'une seule pièce avec la broche filetée extérieure (53).

6. Mécanisme de réglage (5) selon l'une des revendications 1 à 4, **caractérisé en ce que** le filetage intérieur (532) est formé dans une pièce filetée (54) qui est reliée à la broche filetée extérieure (53).

7. Mécanisme de réglage (5) selon la revendication 6, **caractérisé en ce que** la pièce filetée (54) présente un dispositif d'accouplement (61).

8. Mécanisme de réglage (5) selon l'une des revendications précédentes, **caractérisé en ce que** la broche filetée extérieure (53) et la broche filetée intérieure (55) présentent des pas de filetage égaux.

9. Mécanisme de réglage (5) selon l'une des revendications 1 à 7, **caractérisé en ce que** la broche filetée extérieure (53) et la broche filetée intérieure (55) présentent des pas de filetage différents.

10. Mécanisme de réglage (5) selon l'une des revendications précédentes, **caractérisé en ce que** le premier entraînement à broche formé par l'écrou d'entraînement (52) et la broche filetée extérieure (53) et/ou le deuxième entraînement à broche formé par la broche filetée extérieure (53) et la broche filetée intérieure (55) sont formés de manière autobloquante.

11. Mécanisme de réglage (5) selon l'une des revendications précédentes, **caractérisé en ce qu'**un dispositif d'accouplement (552) est formé entre la broche filetée intérieure (55) et la broche filetée extérieure (53), pour l'accouplement libérable et solidaire en rotation de la broche filetée intérieure (55) à la broche filetée extérieure (53).

12. Mécanisme de réglage (5) selon la revendication 11, **caractérisé en ce que** le dispositif d'accouplement présente au moins un élément de butée (552), lequel est fixé solidement à la broche filetée intérieure (55) et peut être soutenu en direction de l'axe (G) contre la broche filetée extérieure (53).

13. Mécanisme de réglage (5) selon la revendication 12, **caractérisé en ce qu'**un élément de butée (552) est formé dans une région d'extrémité sur la broche filetée intérieure (55) et à l'extérieur de celle-ci et peut être soutenu en direction de l'axe (G) contre le filetage intérieur (532).

14. Colonne de direction (1) à réglage motorisé pour un véhicule automobile, comprenant un mécanisme de réglage (5) selon l'une des revendications 1 à 10, qui est disposé entre des tubes d'enveloppe (31, 4) d'une unité d'enveloppe (4), lesquels sont réglables de manière télescopique axialement l'un par rapport à l'autre et supportent l'arbre de direction (32) et/ou est disposé entre une unité porteuse (2) pouvant être reliée à la carrosserie du véhicule automobile et une unité d'enveloppe (4) recevant de manière rotative un arbre de direction (32).
